# EUROPEAN PATENT APPLICATION

(11) **EP 4 033 236 A1**
(43) Date of publication of application: **27.07.2022**
(21) Application number: 21210417.8
(22) Date of filing: 25.11.2021
(51) Int. Cl.: G01N 27/414

(54) **BIOLOGICAL DETECTING CHIP AND BIOLOGICAL DETECTING METHOD**

(30) Priority: 20.01.2021 TW 110102081
(71) Applicant: Sunplus Technology Co., Ltd, Baoshan Township, Hsinchu County 308 (TW); Kao, Hsi-Teng, East Dist., Hsinchu City 300 (TW)
(72) Inventor: KAO, Hsi-Teng, 300 Hsinchu City (TW)
(74) Representative: EIP

(57) **Abstract**

A biological detecting chip and a biological detecting method are disclosed. The biological detecting chip (1) includes a plurality of transistors (T1-Tn) in parallel. Each of the transistors includes a substrate layer (SB), a floating gate (FG), an extending gate (EG) and a biological detecting layer. The substrate layer includes a shared source (S), a shared drain (D) and a channel area. The floating gate is disposed on the channel area. The floating gate includes a poly oxide layer (PL) to extend to an extending metal connect (MT). The extending gate is disposed on the extending metal connect and is electrically connected to the floating gate. The biological detecting layer is disposed on the extending gate. The biological detecting layer includes a plurality of biological probes. The biological detecting layer of the transistors forms a plurality of biological detecting area on the surface of the biological detecting chip.

## Description

### CROSS-REFERENCE TO RELATED APPLICATION

This application claims priority from Taiwan Patent Application No. 110102081, filed on January 20, 2021, in the Taiwan Intellectual Property Office, the content of which is hereby incorporated by reference in its entirety for all purposes.

### BACKGROUND OF THE INVENTION

### 1. Field of the Invention

The present disclosure generally relates to a biological detecting chip and a biological detecting method, and in particular, to the biological detecting chip and the biological detecting method that provide multiple detecting transistors connected in parallel, depositing a biological detecting layer on a floating gate to capture target organisms, and inducing a significant change in the gate charge for detection.

### 2. Description of the Related Art

In biological detection technology, a common method is to use a combination of antibodies and antigens to detect the test object. A color reaction occurs after bonding and is used to determine whether it is a specific biological species. However, in such detection methods, the detecting steps are more complicated and the result may be easily affected by human factors made from the operator. It is also difficult to quantitatively analyze the color results in lower target concentrations. The detection method is complicated and results may vary greatly.

In addition, regarding the detection of microorganisms like bacteria, the detecting processes usually include sampling, cultivation and analysis. Among them, cultivation is the most time-consuming step and the total time is between 24-72 hours. The detection even takes up to two weeks for specific strains to be determined as negative. Before cultivation, the corresponding medium may be prepared according to the target type of bacteria to be analyzed, and the analysis will be conducted after the bacteria are grown. The analysis methods may include observation of colony color, microscope staining observation, polymerase chain reaction (PCR), enzyme-linked immunosorbent assay (ELISA) and so on, so as to determine the type and quantity of the bacteria. The cultivation before bacterial analysis is used to purify the bacterial sample and increase the number of bacteria. Thus, the traditional detecting methods have shortcomings such as long detection time, low sensitivity, and complicated operation. When the test requirement changes, a completely different detecting process or cultivation method must be sought. In actual operation, the complexity of the operation may be increased.

In summary, the conventional biological detecting methods still have considerable problems. Hence, the present disclosure provides the biological detecting chip and the biological detecting method to resolve the shortcomings of conventional technology and promote industrial practicability.

### SUMMARY OF THE INVENTION

In view of the aforementioned technical problems, one objective of the present disclosure is to provide a biological detecting chip and a biological detecting method, which are capable of detecting the type and quantity of the organisms and solve the complex and time-consuming issues of biological detection.

In accordance with one objective of the present disclosure, a biological detecting chip is provided. The biological detecting chip includes a plurality of transistors in parallel and each of the transistors includes a substrate layer, a floating gate, an extending gate and a biological detecting layer. The substrate layer includes a shared source, a shared drain and a channel area disposed between the shared source and the shared drain. The floating gate is disposed on the channel area and the floating gate includes a poly oxide layer extended to an extending metal connect. The extending gate is disposed on the extending metal connect, and the extending gate is electrically connected to the floating gate. The biological detecting layer is disposed on the extending gate and the biological detecting layer includes a plurality of biological probes. The biological detecting layer combined with the plurality of transistors forms a biological detecting area on a surface of the biological detecting chip.

Preferably, the extending gates of the plurality of transistors may include electrodes in the shape of a metal plate.

Preferably, the plurality of biological probes may be fixed on the extending gate by a surface modification process and the plurality of biological probes may include deoxyribonucleic acid (DNA), antibody or aptamer.

Preferably, the surface modification process may include the steps of: cleaning the surface of the extending gate and applying oxygen plasma to the surface of the extending gate to induce hydroxyl groups onto the surface; soaking the biological detecting chip in an alcohol solution of 3-aminopropyltriethoxysilane (APTES), followed by high-temperature baking and dealcoholization in order to modify the surface with amine groups; soaking the biological detecting chip in glutaraldehyde (GA) solution and modifying the surface with aldehyde groups; binding the amine groups of the plurality of biological probes onto the aldehyde group and fixing the plurality of biological probes on the surface of the extending gate.

Preferably, the plurality of transistors may be connected in parallel to form a plurality of detecting rows and adj acent detecting rows of the plurality of detecting rows share the shared source or the shared drain.

Preferably, the plurality of biological detecting area may include a micro flow channel or a sample tank.

Preferably, the plurality of transistors may be connected in parallel and the shared drain of the plurality of transistors is connected to a current measuring device and a voltage converter. A drain current of the shared drain is measured by the current measuring device and converted by the voltage converter to obtain a value of the drain current.

In accordance with one objective of the present disclosure, a biological detecting method is provided. The biological detecting method detects a target object by using the biological detecting chip as mentioned above. The biological detecting method includes the following steps of: placing a blank sample in the plurality of biological detecting areas connected in parallel, and measuring the gate voltage and the drain current of the plurality of transistors to establish a standard line; placing a test sample in the plurality of biological detecting areas for a predetermined time; washing the plurality of biological detecting areas by a blank sample; measuring the gate voltage and the drain current of the plurality of transistors to establish a measurement line and comparing the measurement line with the standard line to determine whether the test sample contains the target object.

Preferably, the gate voltage may be applied to the extending gate of the plurality of transistors. The drain current of the shared drain is measured by a current measuring device and converted by a voltage converter to output a value of the drain current.

Preferably, the sum of the drain current output obtained by measuring the test sample may be compared with the sum of the drain current output of the standard line, so as to calculate the total amount of the target object contained in the test sample on the plurality of biological detecting areas of the plurality of transistors.

As mentioned previously, the biological detecting chip and the biological detecting method in accordance with the present disclosure may have one or more advantages as follows.
1. The biological detecting chip and the biological detecting method are capable of detecting the species and quantities of the organism by using the biological detecting layer and the transistors structure, so as to increase the sensitivity and convenience of the biological detection and to reduce the detecting time through the signal analysis.
2. The biological detecting chip and the biological detecting method may detect different biological species by replacing different biological probes, so as to increase the diversity of biological detecting chips on detecting biological species.
3. The biological detecting chip and the biological detecting method may form a biological detecting platform. The different biological probes can be used without changing the platform structure or the detecting process. The operating efficiency of the biological detection can be effectively improved.
4. The biological detecting chip and the biological detecting method may use the extending gate to prevent the transistors from being exposed to the external environment, so as to improve the stability of the biological detecting chip and increase the life time of the chip. In addition, the biological detecting chip may provide array signal analysis, so as to improve the analysis performance.

### BRIEF DESCRIPTION OF THE DRAWINGS

The technical features, detail structures, advantages and effects of the present disclosure will be described in more details hereinafter with reference to the accompanying drawings that show various embodiments of the invention as follows.
FIG. 1 is a schematic diagram of the biological detecting chip in accordance with the embodiment of the present disclosure.
FIG. 2 is a cross-sectional view of the biological detecting chip along the dotted line AA' in FIG. 1 of the present disclosure.
FIG. 3 is a schematic diagram of the transistor structure in accordance with the embodiment of the present disclosure.
FIG. 4 is a schematic diagram of the surface modification process in accordance with the embodiment of the present disclosure.
FIG. 5 is a flow chart of the biological detecting method in accordance with the embodiment of the present disclosure.
FIG. 6 is a circuit diagram of the biological detecting method in accordance with the embodiment of the present disclosure.
FIG. 7 is a measurement diagram of the biological detecting method in accordance with the embodiment of the present disclosure.

### DETAILED DESCRIPTION OF THE PREFERRED EMBODIMENTS

In order to facilitate the understanding of the technical features, the contents and the advantages of the present disclosure, and the effectiveness thereof that can be achieved, the present disclosure will be illustrated in detail below through embodiments with reference to the accompanying drawings. On the other hand, the diagrams used herein are merely intended to be schematic and auxiliary to the specification, but are not necessary to be true scale and precise to the configuration after implementing the present disclosure. Thus, it should not be interpreted in accordance with the scale and the configuration of the accompanying drawings to limit the scope of the present disclosure on the practical implementation.

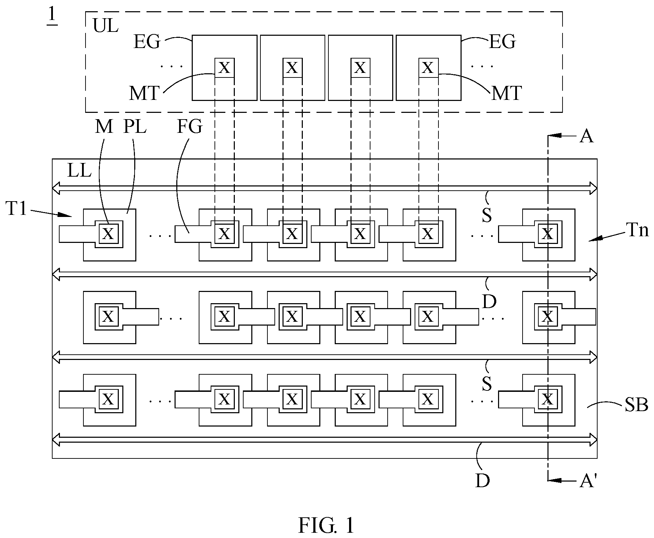

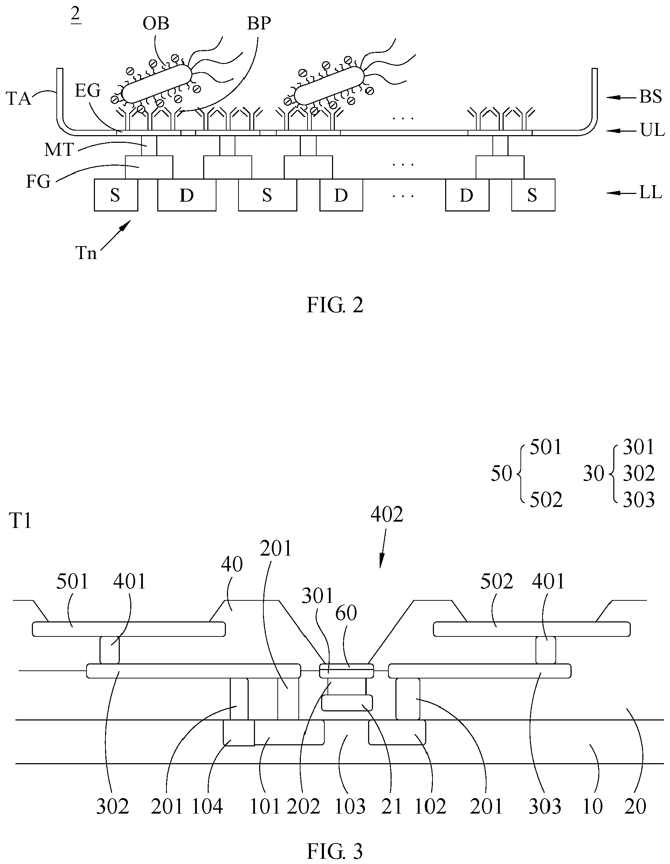

Please refer to FIG. 1, which is the schematic diagram of the biological detecting chip in accordance with the embodiment of the present disclosure. As shown in the figure, the biological detecting chip 1 includes n transistors T1-Tn connected in parallel between the shard source S and drain D. The quantities of the transistors can be determined according to the application of the biological detecting chip 1. The structure of the transistors T1-Tn in parallel includes an upper layer UL and a lower layer LL. Take the transistor T1 for example, the structure of the substrate layer SB includes a shared source S, a shared drain D and a channel area disposed between the shared source S and the shared drain D. The floating gate FG is disposed on the channel area between the shared source S and the shared drain D. A poly oxide layer PL is disposed under the floating gate FG, so as to extend to an extending metal connect MT. The extending metal connect MT extends to the upper layer UL. As shown in the figure, the location of the X block corresponds to the extending metal connect MT, which is used to electrically connect the extending gate EG of the upper layer UL and the floating gate FG of the lower layer LL. It is herein clarified that the upper layer UL is in fact disposed over the lower layer LL such that in each transistors T1-Tn, the extending gate EG of the upper layer UL corresponds to the floating gate FG on the lower layer LL, as may be seen in FIG. 2. The upper layer UL in FIG. 1 is put next to the lower layer LL solely for easier illustration of the respective elements of the upper layer UL and the lower layer LL.

In the present embodiment, the extending gate EG is an electrode shaped as a metal plate. The extending gate EG connects to the covered poly oxide layer PL through the extending metal connect MT, so that the extending gate EG of the upper layer UL may electrically connect to the floating gate FG. In other embodiment, the extending gate EG may be a metal electrode in other shapes. For example, the extending gate EG may be a spiral shape electrode. In addition, several columns of the n transistors T1-Tn connected in parallel can be arranged to form a structure with a plurality of detecting rows. Between each detecting row, the adjacent detecting rows share the shared source S or the shared drain D. When measuring the transistors T1-Tn, the transistors T1-Tn are connected in parallel. The shared source S may connect to the ground and the shared drain D may connect to a current measuring terminal. Based on the voltage applied to the extending gate EG, a sum of the drain current can be measured to obtain detection data for determining the result of the biological detection.

In order to conduct the biological detection, a biological detecting layer may be disposed on the extending gate EG of the transistors T1-Tn. The biological detecting layer can bind with specific biological species. The electric characteristic of the transistor will be changed by the bound biological targets. That is, the conductivity of the transistor T1-Tn may be altered by the biological targets bound on the extending gate EG. The measurement of the current flowing between the shared source S and the shared drain D can be used to determine whether there is a specific biological species. Regarding the biological detecting layer, please refer to FIG. 2, which is the cross-sectional view of the biological detecting chip along the dash-dotted line AA' in FIG. 1 of the present disclosure. As shown in the figure, the biological detecting chip 2 includes a plurality of detecting rows. Each of the plurality of detecting rows includes the upper layer UL and the lower layer LL and the biological detecting layer BS is disposed on the structure of the upper layer UL.

Take the transistor Tn for example, the transistor Tn includes the shared source S and the shared drain D. The floating gate FG is disposed on the channel area between the shared source S and the shared drain D. The floating gate FG electrically connects to the extending gate EG through the extending metal connect MT. The biological detecting layer BS is disposed on the extending gate EG. That is, a plurality of biological probes BP are disposed on the surface of the extending gate EG. The biological probes BP may be the biomolecules like deoxyribonucleic acid (DNA), antibody or aptamer. The plurality of biological probes BP may be fixed on the extending gate by a surface modification process. During the biological detection, the biological probes BP are combined with the object to be detected OB and the generated charge may affect the drain current signal detected from the transistor Tn. Based on the drain current signal, the biological species corresponding to the specific biological probes BP or the quantities of the object to be detected OB can be determined accordingly.

The biological detecting chip 2 may form a detecting row by several transistors connected in parallel. The plurality of detecting rows may further form a detecting array, so as to form a plurality of biological detecting area on the surface of the biological detecting chip 2. In order to contain the biological solution to be detected in these biological detecting areas, the biological detecting layer BS may include a sample tank TA which provides an accommodating space. The object to be detected OB can be accommodated within the biological detecting areas. The solution to be detected may be put over the surface 602 of the biological detecting chip 2, so that the object to be detected OB and the biological probes BP of the biological detecting layer BS can contact and bind to each other. In the present embodiment, the accommodating space is the sample tank TA. However the present disclosure is not limited to this. In the other embodiment, the biological detecting area can be implemented by a micro flow channel for forming the accommodating and detecting space.

Please refer to FIG. 3, which is the schematic diagram of the transistor structure in accordance with the embodiment of the present disclosure. As shown in the figure, each of the transistors T1-Tn, taking transistor T1 for example, includes substrate layer 10, first insulating layer 20, first metal layer 30, second insulating layer 40, second metal layer 50 and biological detecting layer 60. The substrate layer 10 may be a semiconductor substrate, which includes silicon substrate or wafer. A source area 101 and a drain area 102 are formed by doping the substrate layer 10 with n-type dopants. A channel region area 103 is formed between the source area 101 and the drain area 102. A protecting ring 104 may be further provided beside the source area 101. The first insulating layer 20 is disposed on the substrate layer 10. Based on the different constituent materials, the first insulating layer 20 may be formed on the substrate layer 10 by spin coating process, printing process, sputtering process, chemical vapor deposition (CVD) process, atomic layer deposition (ALD) process, plasma enhanced chemical vapor deposition (PECVD) process, high density plasma-chemical vapor deposition (HDP-CVD) process or other similar method. The material of the insulating layer can be an inorganic material including silicon compound or metal oxide. For example, silicon oxide (SiOₓ), silicon nitride (SiNₓ), silicon oxynitride (SiOₓN_{y}), silicon carbon oxide (SiOₓC_{y}), silicon carbonitride (SiCₓN_{y}), aluminum oxide (AlOₓ), titanium oxide (TiOₓ), tantalum oxide (TaOₓ), magnesium oxide (MgOₓ), zinc oxide (ZnOₓ), etc. The first insulating layer 20 includes a floating gate 21. The structure includes a polysilicon oxide layer and is disposed on the channel area 103. According to the isolation of the first insulating layer 20, the gate structure is in the floating state and does not directly contact the source area 101 and the drain area 102.

In the first insulating layer 20, first connecting holes 201 and gate contact hole 202 can be formed by etching or drilling process. The first connecting holes 201 expose the source area 101 and the drain area 102. The gate contact hole 202 exposes the floating gate 21. The first connecting holes 201 and the gate contact hole 202 can be filled with a metal conductive material. The first metal layer 30 is disposed on the first insulating layer 20. The first metal layer 30 includes extending gate 301 and first metal pads 302, 303. The extending gate 301 is electrically connected to the floating gate 21 through the metal material of the gate contact hole 202. The first metal pads 302, 303 are electrically connected to the source area 101 and the drain area 102 respectively through the first connecting holes 201. The material of the first metal layer 30 may include copper (Cu), tungsten (W), titanium (Ti), tantalum (Ta), chromium (Cr), platinum (Pt), silver (Ag), gold (Au), lithium (Li), magnesium (Mg), Aluminum (Al) and so on. The structure of the source area 101, the drain area 102, the channel area 103 and the floating gate 21 to the extending gate 301 forms an n type metal-oxide-semiconductor field-effect transistor (NMOS).

In order to conduct biological detection using the abovementioned n type metal-oxide-semiconductor field-effect transistor, the biological detecting layer 60 is formed on the extending gate. The biological detecting layer 60 includes a plurality of biological probes. For example, coating an antibody layer on the extending gate 301, so that the surface 601 of the extending gate 301 may have the plurality of biological probes. Please refer to FIG. 3, the similar technical features will not be repeated. The second insulating layer 40 is disposed on the first metal layer 30. The second insulating layer 40 covers the first metal layer 30 and is made as the protecting layer of the detecting chip. The material of the second insulating layer 40 may include nitrogen or nitride. The second insulating layer 40 includes second contact holes 401 and detecting opening 402. The contact holes 401 can also be formed by the photomask etching process. The second metal layer 50 is disposed on the second insulating layer 40. The second metal layer 50 includes second metal pads 501, 502, which can be made by the same or similar material of the first metal layer 30. The second metal pads 501, 502 are electrically connected to the first metal pads 302, 303 respectively through the second contact holes 401. The second metal pads 501, 502 can be used as the contact terminals or contact pads for external connection lines.

In the present embodiment, the second metal pad 501 connected to the source area 101 may connect to the ground terminal and the second metal pad 502 connected to the drain area 102 may connect to the current measuring device and the voltage converter. The gate part is connected to the external voltage source. By changing the gate voltage, such as by providing a voltage from 0V to 2V, and measuring the output drain current, the drain current value can be obtained through the output from the voltage converter, and the base line of the measurement can be established. During the detecting process, the object to be detected binds to the biological probes. The charge of the gate electrode will be changed and the measured output current will be changed accordingly. By comparing the voltage-current changes before and after the change, the target object on the detection can be determined.

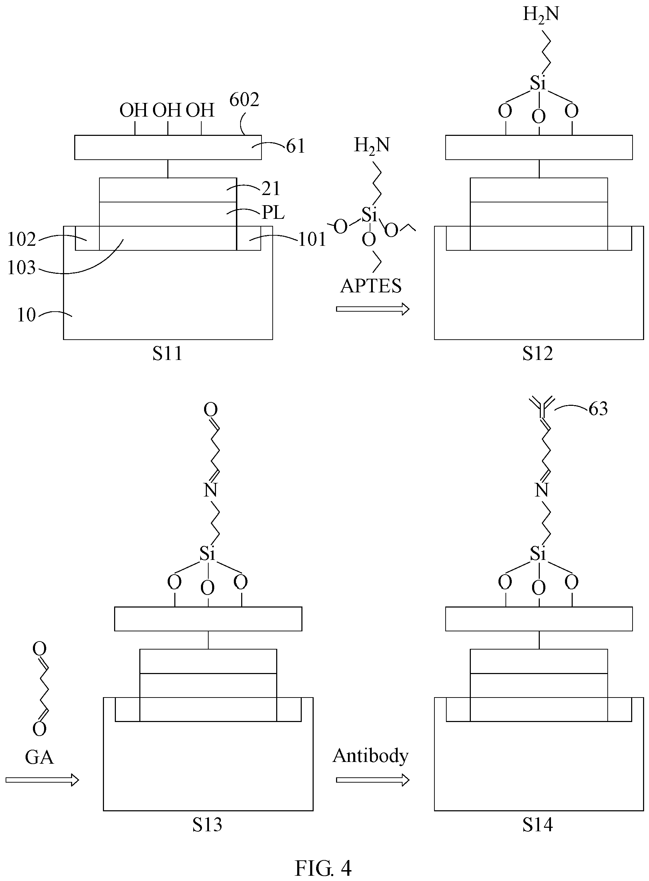

Please refer to FIG. 4, which is the schematic diagram of the surface modification process in accordance with the embodiment of the present disclosure. As shown in the figure, the production process of the biological detecting chip firstly forms the source area 101, the drain area 102 and the channel area 103. Then the floating gate 21 is formed on the channel area 103. The poly oxide layer PL is included under the floating gate 21 and extends to the metal connect for further connecting to the extending gate 61. The surface modification process on the extending gate 61 includes the following steps (S11-S14):
Step S11: cleaning the surface of the extending gate 61 and applying oxygen plasma to the surface of the extending gate 61 to induce hydroxyl groups onto the surface. The exposed surface of the extending gate 61 is washed and the oxygen plasma is applied to the surface of the extending gate 61, so as to make the surface carry hydroxyl groups (-OH).
Step S12: soaking the biological detecting chip in an alcohol solution of 3-aminopropyltriethoxysilane and modifying the surface of the extending gate 61 with amine groups after high-temperature baking and dealcoholization. The biological detecting chip is soaked in the alcohol solution of 3-aminopropyltriethoxysilane (APTES). After high-temperature baking and dealcoholization, the surface of the extending gate 61 is modified with amine groups (-NH₂).
Step S13: soaking the biological detecting chip in a glutaraldehyde solution and modifying the surface with aldehyde groups. The biological detecting chip is soaked in the glutaraldehyde (GA) solution, so that the surface of the extending gate 61 is modified with aldehyde group (-CHO).
Step S14: binding the amine groups of the plurality of biological probes to the aldehyde groups and fixing the plurality of biological probes on the surface of the extending gate 61. The antibody 63 is added to combine the amine group of the antibody with the aldehyde group, and then the antibody 63 is fixed on the surface of the extending gate 61. The surface containing multiple antibodies 63 can be used as the biological detecting layer for the object to be detected.

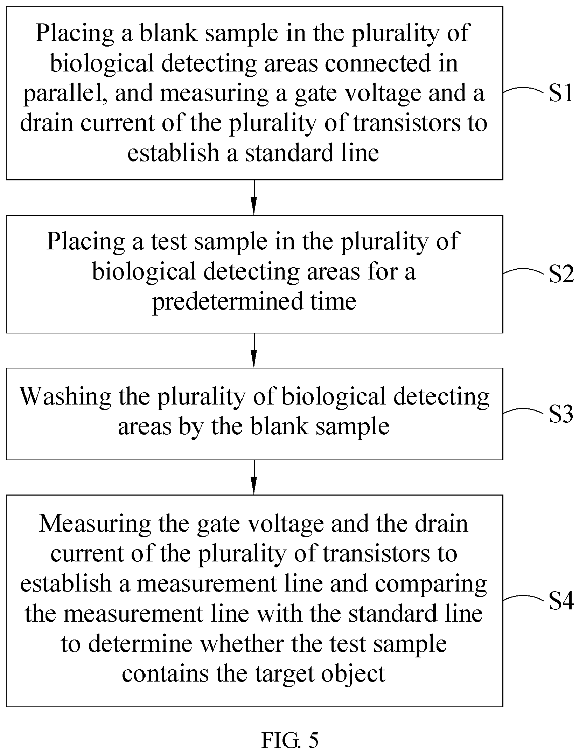

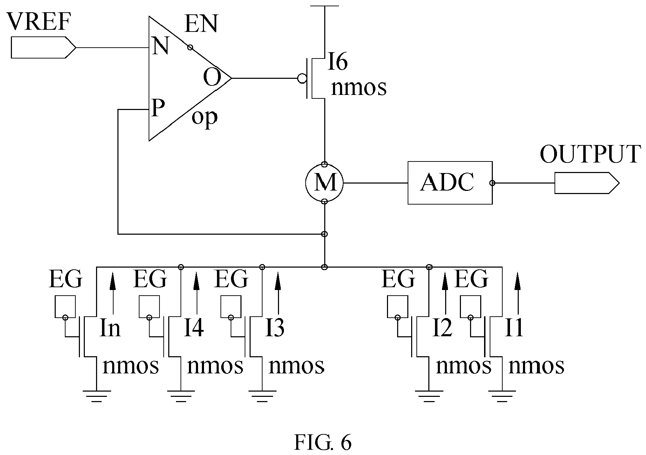

Please refer to FIG. 5, which is the flow chart of the biological detecting method in accordance with the embodiment of the present disclosure. In the present embodiment, the biological detecting chip may include the detecting row or multiple detecting rows formed by the plurality of transistors in parallel mentioned in the previous embodiment. The biological detection to the object is conducted by the biological detecting chip. The biological detecting method includes the following steps (S1-S4):
Step S1: placing a blank sample in the plurality of biological detecting areas connected in parallel, and measuring a gate voltage and a drain current of the plurality of transistors to establish a standard line. Please refer to FIG. 6, which is the circuit diagram of the biological detecting method in accordance with the embodiment of the present disclosure. As shown in the figure, the biological detecting chip includes detecting rows formed by the transistors nmos connected in parallel. The shared sources S of the transistors nmos connect to the ground and the shared drains D connect to the current measuring device M. The gate electrode extends to the extending gate EG. When the blank sample, such as a neutral buffer, is placed on the biological detecting areas, the extending gate EG of the biological detecting layer is covered by the blank sample. At this time, different gate voltages are applied to the extending gate EG. For example, the voltages are provided from 0V to 2V. The current measuring device M measures the output current I1-In of the shared drain D. Since the transistors nmos are connected in parallel, the sum of the output current I1-In can be converted to digital signal through the voltage converter ADC. The information from the drain current output is sent from the output terminal OUTPUT and the standard line of the measurement is established accordingly.

In the present embodiment, the biological detecting chip implemented for the biological detecting method further includes an amplifier OP and transistor pmos. The input terminal of the amplifier OP respectively connects to the reference voltage VREF and the shared drain D in parallel. The output terminal of the amplifier OP is coupled to the control terminal of the transistor pmos. The transistor pmos is coupled to the current measuring device M. In other embodiment, the shared source S and the shared drain D may connect to a voltage source and signal collecting device through the contact. The information of the source current can be collected by the external device.

Step S2: placing a test sample in the plurality of biological detecting areas for a predetermined time. The test solution containing the object to be detected is placed in the biological detecting areas. For example, the test sample is placed in the sample tank for a period of time, so that the object to be detected can bind to the biological probes of the biological detecting layer. The stand time for the test sample is determined by the object species to be detected.

Step S3: washing the plurality of biological detecting areas with the blank sample. In order to ensure specific binding between the object to be detected and the biological probes, the biological detecting areas are washed after the predetermined placing time and then the test sample is placed on the areas again. After washing and placement, the quantity of the test sample can be ensured. In the present embodiment, the number of the washing may not be limited, and it can be adjusted according to the concentration of the test sample and the binding characteristics of the biological probe.

Step S4: measuring the gate voltage and the drain current of the plurality of transistors to establish a measurement line and comparing the measurement line with the standard line to determine whether the test sample contains the target object. After the washing and placing procedures, the different gate voltages are applied to the extending gate EG again. The output current II-In of the shared drain D are measured by the current measuring device M and the sum of the output current I1-In can be converted to digital signal through the voltage converter ADC. The information of the drain current is output from the output terminal OUTPUT and the measurement line of the test sample is established accordingly. The difference between the measurement line and the standard line (i.e., the base line) are compared and whether the test sample contains the target object is determined according to the amount of the change. If there is no obvious deviation of the measurement line, it means that the test sample does not contain the target object. That is, the biological probes did not bind with the target object and the gate charge of the chip wasn't affected. On the contrary, if the deviation exceeds the predetermined range, it is determined that the test sample contains the target object.

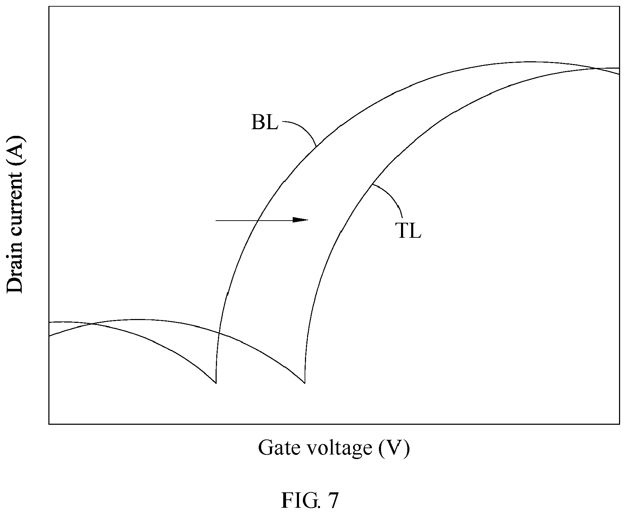

Please refer to FIG. 7, which is the measurement diagram of the biological detecting method in accordance with the first embodiment of the present disclosure. Please also refer to the detecting method mentioned in FIG. 5. In the present embodiment, the biological detection to the object corresponding to the biological probes is conducted by the biological detecting chip. Firstly, the blank sample is placed on the biological detecting area. For example, the neutral buffer is placed on the biological detecting area. The standard line BL is established by applying different gate voltages and measuring the corresponding drain current. As mentioned in the previous embodiment, the shared sources S connect to the ground and the shared drains D connect to the current measuring device M. When the different gate voltages are applied, the current measuring device M may output the output current of the shared drain D and the relationship between the gate voltage and the drain current may establish the standard line BL.

After that, the test sample is placed on the biological detecting area for the predetermined time and the biological detecting area is washed by the blank sample. When the binding between the object to be detected and the biological probe is finished, the gate voltage and the drain current of the biological detecting chip are measured for establishing the measurement line TL. The measurement method is similar to the steps mentioned in the previous embodiment. The difference between the measurement line TL and the standard line BL is compared and whether the solution to be detected contains the target object is determined according to the amount of the change. In the present embodiment, the measurement line TL moves in the positive direction toward the standard line BL. However, the present disclosure is not limited on this. The shift direction or the shift amount can be different according to the detecting target corresponding to the different biological probes. By disposing different kinds of the biological probes, the same structure of the detecting chip can be used to detect the multiple types or species. The convenience and practicability of the biological detection can be improved.

The present disclosure disclosed herein has been described by means of specific embodiments. However, numerous modifications, variations and enhancements can be made thereto without departing from the spirit and scope of the disclosure set forth in the claims.

## Claims

1. A biological detecting chip (1, 2) comprising a plurality of transistors (T1-Tn) in parallel and each of the plurality of transistors (T1-Tn) comprising:
a substrate layer (10, SB) comprising a shared source (S), a shared drain (D) and a channel area (103) disposed between the shared source (S) and the shared drain (D);
a floating gate (21, FG) being disposed on the channel area (103), the floating gate (21, FG) comprising a poly oxide layer (PL) to extend to an extending metal connect (MT);
an extending gate (61, 301, EG) being disposed on the extending metal connect (MT), the extending gate (61, 301, EG) being electrically connected to the floating gate (21, FG); and
a biological detecting layer (60, BS) being disposed on the extending gate (61, 301, EG), the biological detecting layer (60, BS) comprising a plurality of biological probes (BP);
wherein the biological detecting layer (60, BS) of the plurality of transistors (T1-Tn) forms a plurality of biological detecting areas on a surface of the biological detecting chip (1, 2).

2. The biological detecting chip (1, 2) of claim 1, wherein the extending gate (61, 301, EG) of the plurality of transistors (T1-Tn) comprises an electrode shaped as a metal plate.

3. The biological detecting chip (1, 2) of claim 1 or claim 2, wherein the plurality of biological probes (BP) are fixed on the extending gate (61, 301, EG) by a surface modification process, the plurality of biological probes (BP) comprise deoxyribonucleic acid, antibody or aptamer.

4. The biological detecting chip (1, 2) of claim 3, wherein the surface modification process comprises the steps of:
cleaning a surface of the extending gate (61, 301, EG) and applying oxygen plasma to the surface of the extending gate (61, 301, EG) to induce hydroxyl group onto the surface;
soaking the biological detecting chip (1, 2) in an alcohol solution of 3-aminopropyltriethoxysilane and modifying the surface with amine group after high-temperature baking and dealcoholization;
soaking the biological detecting chip (1, 2) in glutaraldehyde solution and modifying the surface with aldehyde group; and
binding the amine groups of the plurality of biological probes (BP) to the aldehyde group and fixing the plurality of biological probes (BP) on the surface of the extending gate (61, 301, EG).

5. The biological detecting chip (1, 2) of any one of preceding claims, wherein the plurality of transistors (T1-Tn) are connected in parallel to form a plurality of detecting rows and adjacent detecting rows of the plurality of detecting rows share the shared source (S) or the shared drain (D).

6. The biological detecting chip (1, 2) of any one of preceding claims, wherein the plurality of biological detecting areas comprise a micro flow channel or a sample tank (TA).

7. The biological detecting chip (1, 2) of any one of preceding claims, wherein the plurality of transistors (T1-Tn) are connected in parallel and the shared drain (D) of the plurality of transistors (T1-Tn) is connected to a current measuring device (M) and a voltage converter (ADC), wherein a drain current of the shared drain (D) is measured by the current measuring device (M) and converted by the voltage converter (ADC) to obtain a value of the drain current.

8. A biological detecting method, which performs biological detection of a target object by using the biological detecting chip (1, 2) described in any one of claims 1 to 7, the biological detecting method comprising the following steps of:
placing a blank sample in the plurality of biological detecting areas connected in parallel, and measuring a gate voltage and a drain current of the plurality of transistors (T1-Tn) to establish a standard line (BL);
placing a test sample in the plurality of biological detecting areas for a predetermined time;
washing the plurality of biological detecting areas by the blank sample;
measuring the gate voltage and the drain current of the plurality of transistors (T1-Tn) to establish a measurement line (TL) and comparing the measurement line (TL) with the standard line (BL) to determine whether the test sample contains the target object.

9. The biological detecting method of claim 8, wherein the gate voltage is applied to the extending gate (61, 301, EG) of the plurality of transistors (T1-Tn), wherein the drain current of the shared drain (D) is measured by a current measuring device (M) and converted by a voltage converter (ADC) to output a value of the drain current.

10. The biological detecting method of claim 9, wherein the sum of the drain current output by measuring the test sample is compared with the sum the drain current measured to the standard line (BL), so as to calculate the total amount of the target object contained in the test sample on the plurality of biological detecting areas of the plurality of transistors (T1-Tn).

11. The biological detecting method of claim 9 or claim 10, wherein the extending gate (61, 301, EG) of the plurality of transistors (T1-Tn) comprises an electrode shaped as a metal plate.

12. The biological detecting method of any one of claims 9 to 11, wherein the plurality of biological probes (BP) are fixed on the extending gate (61, 301, EG) by a surface modification process, the plurality of biological probes (BP) comprise deoxyribonucleic acid, antibody or aptamer.

13. The biological detecting method of claim 12, wherein the surface modification process comprises the steps of:
cleaning a surface of the extending gate (61, 301, EG) and applying oxygen plasma to the surface of the extending gate (61, 301, EG) to induce hydroxyl group onto the surface;
soaking the biological detecting chip (1, 2) in an alcohol solution of 3-aminopropyltriethoxysilane and modifying the surface with amine group after high-temperature baking and dealcoholization;
soaking the biological detecting chip (1, 2) in glutaraldehyde solution and modifying the surface with aldehyde group; and
binding the amine groups of the plurality of biological probes (BP) to the aldehyde group and fixing the plurality of biological probes (BP) on the surface of the extending gate (61, 301, EG).

14. The biological detecting method of any one of claims 9 to 13, wherein the plurality of transistors (T1-Tn) are connected in parallel to form a plurality of detecting rows and adjacent detecting rows of the plurality of detecting rows share the shared source (S) or the shared drain (D).

15. The biological detecting method of any one of claims 9 to 14, wherein the plurality of biological detecting areas comprise a micro flow channel or a sample tank (TA).

16. The biological detecting method of any one of claims 9 to 15, wherein the plurality of transistors (T1-Tn) are connected in parallel and the shared drain (D) of the plurality of transistors (T1-Tn) is connected to a current measuring device (M) and a voltage converter (ADC), wherein a drain current of the shared drain (D) is measured by the current measuring device (M) and converted by the voltage converter (ADC) to obtain a value of the drain current.
